# EUROPÄISCHE PATENTSCHRIFT

(11) **EP 2 169 781 B1**
(45) Veröffentlichungstag und Bekanntmachung des Hinweises auf die Patenterteilung: **01.10.2014**
(21) Anmeldenummer: 09169765.6
(22) Anmeldetag: 08.09.2009
(51) Int. Cl.: H01R 35/02, B60R 16/027, H02G 11/02

(54) **Wickelfederkassette**
Thread coiling cassette
Cassette à ressort spiralé

(30) Priorität: 24.09.2008 DE 102008048784
(43) Veröffentlichungstag der Anmeldung: 31.03.2010
(73) Patentinhaber: SUMIDA flexible connections GmbH, 01454 Radeberg (DE)
(72) Erfinder: Röder, Jürgen, 34393 Grebenstein (DE)
(74) Vertreter: Carlsohn, Alexander

(56) Entgegenhaltungen:
- EP-A1- 1 800 956
- US-A1- 2002 019 150

## Beschreibung

Die Erfindung betrifft eine Wickelfederkassette, die insbesondere zur Verwendung in Kraftfahrzeugen geeignet ist.

Wickelfederkassetten werden insbesondere in der Automobilindustrie verwendet, um eine leitungsgebundene elektrische Verbindung zwischen einem bewegbaren Bauteil, beispielsweise der Lenkwelle, und einem ortsfesten Bauteil, beispielsweise der Lenksäule oder des Lenkstockschalters, eines Kraftfahrzeuges herzustellen. Dabei ist die Lenksäule relativ zum Lenkgehäuse rotierbar.

In der gattungsgemäßen DE 198 37 076 C2 wird eine Wickelfederkassette beschrieben, die einen Rotor und einen Stator aufweist, wobei der Rotor und der Stator konzentrisch und mit radialem Abstand zueinander angeordnet sind. Der Rotor weist eine ringförmige Bodenwand mit einer zentralen Öffnung auf. Der Stator weist eine ringförmige Deckwand mit einer zentralen Öffnung auf. Am inneren Umfang der Bodenwand ist eine erste, innere, zylinderförmige Seitenwand ausgebildet, die sich orthogonal von der ringförmigen Bodenwand des Rotors zu der ringförmigen Deckwand des Stators erstreckt. Am äußerem Umfang der Deckwand ist eine zweite, äußere, zylinderförmige Seitenwand ausgebildet, die sich orthogonal von der ringförmigen Deckwand des Stators zu der ringförmigen Bodenwand des Rotors erstreckt. Die innere Mantelfläche der ersten zylinderförmigen Seitenwand bildet die Aufnahme der Lenkwelle, an der der Rotor drehfest gehalten ist. Der Rotor ist rotierbar mit dem Stator verbunden.

Die innere Mantelfläche der äußeren Seitenwand und die äußere Mantelfläche der inneren Seitenwand sowie die Bodenwand und die Deckwand umgrenzen eine Kammer, in der ein Flachbandkabel beweglich angeordnet ist. Dabei ist das Flachbandkabel mit einem Ende auf der äußeren Mantelfläche der inneren Seitenwand aufgewickelt, während es mit einem anderen Ende an der inneren Mantelfläche der äußeren Seitenwand anliegt.

DE 41 21 137 C3 offenbart eine Wickelfederkassette, dessen äußere Seitenwand einen vorstehenden radial nach außen gekrümmten Abschnitt aufweist. In neutraler Stellung befindet sich die Umbiegung des Flachbandkabels. Der Vorteil dieser Lösung soll darin bestehen, daß der Krümmungsradius der Umbiegung vergrößert wird, wodurch Ermüdungsbrüche des Kabels verhindert werden sollen.

Auf diese Weise wird jedoch eine S-förmige Seitenwand erhalten. Es hat sich gezeigt, daß eine derartige Ausgestaltung, die bei stärkeren Drehbewegungen zunächst eine Verringerung des Krümmungsradius und anschließend eine Vergrößerung des Krümmungsradiums erfordert, die Umbiegung des Flachbandkabels belastet. Die Radienwechsel von einem großen Krümmungsradius zu einem kleinen Krümmungsradiums stellen besondere Ansprüche an die Elastizität des Flachbandkabels. Das Flachbandkabel muß typischerweise fünf Millionen Wechselbelastungen ohne Bruch bewältigen können. Die S-förmige Ausgestaltung der Seitenwand bietet daher besondere Schwierigkeiten.

Es ist daher auch nicht möglich, dickere Flachbandkabel als Wickelfederkassetten mit konzentrischer Anordnung von Stator und Rotor zu verwenden. Die Verwendung dickerer Flachbandkabel ist jedoch wünschenswert, insbesondere im Hinblick auf die immer höher werdende Stromaufnahme von Verbrauchern, die im Lenkrad angeordnet sind, beispielsweise der Lenkradheizung.

Es besteht daher nach wie vor der Bedarf an einer Wickelfederkassette, die den Einsatz von dickeren Flachbandkabeln, also Kabeln mit einer Dicke von mehr als 35 µm, ermöglicht. Die Verwendung von Leitern mit größerer Breite, aber gleichbeleibender Dicke ist nicht wünschenswert, da dies zu einer Vergrößerung des Bauraumes für die Wickelfederkassette führen würde. Auch die Verwendung mehrerer Kabel ist nachteilig, da dies mit einer Erhöhung der Herstellungskosten verbunden wäre.

Aufgabe der Erfindung ist es, die Nachteile nach dem Stand der Technik zu beseitigen. Es soll insbesondere eine Wickelfeder angegeben werden, die eine geringere Biegebeanspruchung von Flachbandkabeln sicherstellt.

Diese Aufgabe wird durch die Merkmale des Ansprüche 1 und 12 gelöst. Zweckmäßige Ausgestaltungen der Erfindungen ergeben sich aus den Merkmalen der Ansprüche 2 bis 11 und 13.

Nach Maßgabe der Erfindung ist eine Wickelfederkassette mit einem beweglichen Bauteil (Rotor) und einem feststehenden Bauteil (Stator) vorgesehen, wobei eines der Bauteile eine erste, innere zylindrische Seitenwand und das andere Bauteil eine zweite, äußere zylindrische Seitenwand aufweist, die einander unter Ausbildung eines Bewegungsspaltes gegenüberliegen, und mit einem Flachbandkabel, das in dem Bewegungsspalt unter Ausbildung einer U-förmigen Umbiegung angeordnet ist und den Rotor mit dem Stator elektrisch verbindet. Eine der zylindrischen Seitenwände ist kreiszylindrisch, während die andere zylindrische Seitenwand eine Innenseite mit einem ersten, kreisbogenförmigen Abschnitt und einem zweiten, konvexen Abschnitt, der dem ersten kreisbogenförmigen Abschnitt gegenüberliegt, aufweist, wobei der erste kreisbogenförmige Abschnitt und der zweite, konvexe Abschnitt jeweils radial von der kreiszylindrischen Seitenwand beabstandet sind, wobei
- der radiale Abstand (b) zwischen dem ersten, kreisbogenförmigen Abschnittes (16) und der kreiszylindrischen Seitenwand (7) geringer als der radiale Abstand (a) zwischen dem zweiten, konvexen Abschnitt (17) und der kreiszylindrischen Seitenwand (7) ist;
- die Innenseite der zylindrischen Seitenwand (8) mit dem ersten, kreisbogenförmigen Abschnitt (16) und dem zweiten, konvexen Abschnitt ohne einen Sattelpunkt ausgebildet ist; und
- die U-förmige Umbiegung des Flachbandkabels zwischen der kreiszylindrischen Seitenwand und dem zweiten, konkaven Abschnitt angeordnet ist.

In der neutralen Stellung befindet sich die U-förmige Biegung des Flachleiterbandkabels vorzugsweise in dem Abschnitt des Bewegungsspaltes, der die maximale radiale Ausdehnung hat. Seine maximale radiale Ausdehnung weist der Bewegungsspalt an der Stelle auf, an der der zweite, konkave Abschnitt maximal von der kreiszylindrischen Seitenwand beabstandet ist.

In Ausführungsform der Erfindung ist der erste, kreisbogenförmige Abschnitt (16) halbkreisförmig (im folgenden als erster halbkreisförmiger Abschnitt bezeichnet) und der zweite, konvex Abschnitt ebenfalls halbkreisförmig (im folgenden als zweiter halbkreisförmiger Abschnitt bezeichnet), wobei der erste halbkreisförmige Abschnitt und der zweite halbkreisförmige Abschnitt gleiche Krümmungsradien aufweisen.

Die Innenseite der anderen zylindrischen Seitenwand kann ferner geradlinige Abschnitte aufweisen. Vorzugsweise weist die Innenseite der anderen zylindrischen Seitenwand zwei geradlinige, einander gegenüberliegenden Abschnitte auf, die den ersten halbkreisförmigen Abschnitt mit dem zweiten halbkreisförmigen Abschnitt ohne Ausbildung eines Umkehrpunktes verbinden. Alternativ kann die Innenseite der anderen zylindrischen Seitenwand elliptisch oder oval geformt sein.

Unter dem Begriff "Innenseite" einer Seitenwand wird hier die Seite einer Seitenwand verstanden, die der gegenüberliegenden Seitenwand zugewandt ist.

Die Erfindung bietet den Vorteil, daß der Abschnitt des Bewegungsspaltes, in dem die U-förmige Umkehrung des Flachbandkabels angeordnet ist, eine größere Breite (Abstand b) aufweist, als in seinen übrigen Abschnitten, ohne daß eine S-förmige Seitenwand oder ein Sattelpunkt ausgebildet wird. Aus diesem Grunde ist der Übergang zwischen dem Abschnitt des Bewegungsspalt mit großer Breite und dem Abstand des Bewegungsspaltes mit geringer Breite gleitend, so daß das Flachbandkabel weniger belastet wird.

Etwa 80 % der Lastwechsel in Folge einer Lenkraddrehung finden in einem Winkelbereich von ± 60 °C, ausgehend von der neutralen Stellung statt. Die Erfindung sorgt für eine Verringerung der Belastung des U-förmigen Abschnittes in einem Wickelbereich von ± 90 %, insbesondere indem die Ausbildung eines Sattelpunktes in der Kontur der Innenwand vermieden wird. Die aus dem Stand der Technik bekannten Lösungen erlauben dies nur für einen Winkelbereich von ± 15 %.

Die erfindungsgemäße Wickelfeder ermöglicht somit den Einsatz von Flachbandkabeln, die im Vergleich zum Stand der Technik eine höhere Dicke, insbesondere eine Dicke von mehr als 35 µm aufweisen. Auf diese Weise kann die Stromversorgung auch von elektrischen Verbrauchern mit hoher Stromaufnahme im Lenkrad eines Kraftfahrzeuges sichergestellt werden.

Die Oberfläche des Flachbandkabels kann ganz oder teilweise mit einem Haftmittel beschichtet sein. Das Haftmittel erhöht die Haftung des Flachbandkabels an den Seitenwänden und verbessert dabei das Auf- und Abwickeln des Kabels von Seitenwänden.

In einer bevorzugten Ausführungsform weist der Rotor die erste, innere zylindrische Seitenwand auf. Dabei bildet die erste, innere zylindrische Seitenwand die kreiszylindrische Seitenwand. Der Stator hingegen weist die zweite, äußere zylindrische Seitenwand auf, die die andere Seitenwand ist.

Nach Maßgabe der Erfindung ist ferner die Verwendung der erfindungsgemäßen Wickelfederkassette in einem Kraftfahrzeug vorgesehen. Vorzugsweise weist dazu der der Rotor eine ringförmige Deckwand mit einer zentralen Öffnung auf, wobei am inneren Umfang der Deckwand die erste, innere, zylinderförmige Seitenwand der Wickelfederkassette ausgebildet ist, die sich orthogonal von der ringförmigen Deckwand des Rotors zu der Bodenwand des Stators erstreckt, und wobei die Außenseite der ersten zylinderförmigen Seitenwand eine Aufnahme für die Lenksäule des Kraftfahrzeuges bildet, an der der Rotor, der rotierbar mit dem Stator verbunden ist, drehfest gehalten ist.

Die Erfindung wird nachstehend anhand eines Ausführungsbeispiels, das die Erfindung nicht einschränken soll, unter Bezugnahme auf die Zeichnungen näher erläutert. Dabei zeigen
- Fig. 1: eine perspektivische Darstellung einer Wickelfederkassette nach dem Stand der Technik, wobei die Deckwand des Rotors entfernt worden ist;
- Fig. 2: eine perspektivische Darstellung einer erfindungsgemäßen Ausführungsform einer Wickelfederkassette, wobei die Deckwand des Rotors entfernt worden ist;
- Fig. 3: eine perspektivische Schnittdarstellung einer Wickelfederkassette nach dem Stand der Technik, wobei die Deckwand des Rotors entfernt worden ist;
- Fig. 4: eine perspektivische Schnittdarstellung einer erfindungsgemäßen Ausführungsform einer Wickelfederkassette, wobei die Deckwand des Rotors entfernt worden ist; und
- Fig. 5: eine Querschnittsdarstellung eines Flachbandkabels, das in einer erfindungsgemäßen Wickelfederkassette eingesetzt werden kann.

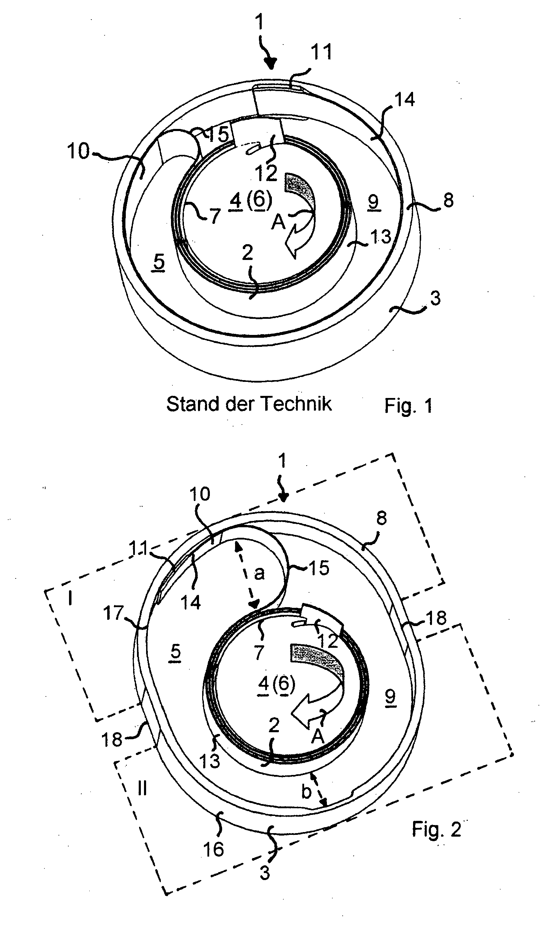

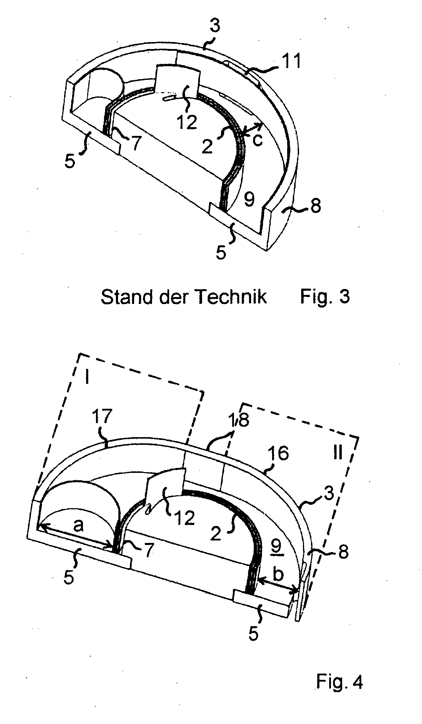

Die erfindungsgemäße, in den Figuren 2 und 4 gezeigte Wickelfederkassette 1 weist einen Rotor 2 und einen Stator 3 auf. Der Rotor 2 besitzt eine ringförmige Deckwand (nicht gezeigt) mit einer zentralen Öffnung 4. Der Stator weist eine Bodenwand 5 mit einer zentralen Öffnung 6 auf. Am inneren Umfang der Deckwand des Rotors 2 ist eine erste, innere, zylinderförmige Seitenwand 7 ausgebildet, die sich orthogonal von der ringförmigen Deckwand des Rotors 2 zu der Bodenwand 5 des Stators 3 erstreckt. Am äußerem Umfang der Bodenwand 5 ist eine zweite, äußere, zylinderförmige Seitenwand 8 ausgebildet, die sich orthogonal von der Bodenwand 5 des Stators 3 zu der ringförmigen Deckwand des Rotors 3 erstreckt.

Die innere zylinderförmige Seitenwand 7 und die äußere zylinderförmige Seitenwand 8 sind voneinander beabstandet. Zwischen der inneren zylinderförmigen Seitenwand 7 und der äußeren zylinderförmigen Seitenwand 8 ist ein umlaufender Bewegungsspalt 9 ausgebildet, in dem ein Flachbandkabel 10 angeordnet ist. Das Flachbandkabel 10 stellt eine elektrische Verbindung zwischen einem Steckeranschluß 11, der an dem Stator 3 angebracht ist, und einem Steckeranschluß 12, der an dem Rotor 2 angebracht ist, her.

Ein erster Teilbereich 13 des Flachbandkabels 10 ist in einer ersten Wickelrichtung auf die Außenseite der inneren zylindrischen Seitenwand 7 des Rotors gewickelt, ein zweiter Teilbereich 14 des Flachbandkabels 10 ist in einer zur ersten Wickelrichtung entgegengesetzten Wickelrichtung auf die Innenseite der äußere Seitenwand 8 gewickelt oder liegt an der Innenseite der äußeren Seitenwand 8 an. Ein dritter Teilbereich des Flachbandkabels 10, der zwischen dem ersten Teilbereich 13 und dem zweiten Teilbereich 14 angeordnet ist, bildet die U-förmige Umbiegung 15.

Die innere zylindrische Seitenwand 7 ist kreiszylindrisch ausgebildet. Die Innenseite der äußeren zylindrischen Seitenwand 8 weist einen ersten halbkreisförmigen Abschnitt 16 und einen zweiten halbkreisförmigen Abschnitt 17 auf, der dem ersten halbkreisförmigen Abschnitt 16 gegenüberliegt. Der erste und zweite halbkreisförmige Abschnitt 16, 17 sind jeweils radial von der kreiszylindrischen Seitenwand 7 beabstandet. Lediglich zur Veranschaulichung ist in Fig. 2 der erste halbkreisförmige Abschnitt 16 als im Bereich II liegend gekennzeichnet, während der zweite halbkreisförmige Abschnitt 17 als im Bereich I liegend gekennzeichnet ist. Der Abstand b zwischen dem ersten halbkreisförmigen Abschnitts 16 und der kreiszylindrischen Seitenwand 7 ist dabei geringer als der Abstand a zwischen dem des zweiten halbkreisförmigen Abschnitts 17 und der kreiszylindrischen Seitenwand 7. Der erste halbkreisförmige Abschnitt 16 und der zweite halbkreisförmige Abschnitt 17 weisen gleiche Krümmungsradien auf. Die U-förmige Umbiegung 15 des Flachbandkabels 10 ist zwischen der kreiszylindrischen Seitenwand 7 und dem zweiten halbkreisförmigen Abschnitt 17 angeordnet. Ferner weist die Innenseite der äußeren zylindrischen Seitenwand 8 zwei geradlinige, einander gegenüberliegende und parallel zueinander verlaufende Abschnitte 18 auf, die den ersten halbkreisförmigen Abschnitt 16 mit dem zweiten halbkreisförmigen Abschnitt 18 ohne Ausbildung eines Sattelpunktes verbinden. Die Form der Innenseite der äußeren zylindrischen Seitenwand 8 ähnelt somit einer Ellipse.

Im neutralen Zustand der Wickelfeder, der in Fig. 2 dargestellt ist, befindet sich die U-förmige Umbiegung zwischen der inneren Seitenwand 7 und dem maximal beabstandeten Punkt des halbkreisförmigen Abschnitts 17. Wird der Rotor in Richtung des Pfeils A gedreht, so wird ein Teil des Flachbandkabels, das auf der Seitenwand 7 des Rotors 2 aufgewickelt ist, von diesem abgewickelt. Dabei verschiebt sich die U-förmige Umkehrung 15 in Pfeilrichtung A. Gleichzeitig wird ein anderer Teil des Flachbandkabels 10 gegen die Innenseite der äußeren Seitenwand 8 gedrückt und liegt dort an. Die Haftung des Flachbandkabels 10 an der Seitenwand 8 wird verbessert, wenn die Oberfläche des Flachbandkabels zumindest in dem Bereich, der in Kontakt mit der Seitenwand gelangen könnte, mit einem Haftmittel beschichtet ist.

Wird der Rotor 2 in entgegengesetzter Richtung zu Pfeil A gedreht, so wird ein Teil des Flachbandkabels, insbesondere die bisherige U-förmige Umkehrung 15, auf die Seitenwand 7 des Rotors aufgewickelt, wobei sich die U-förmige Umkehrung 15 ebenfalls in entgegengesetzter Richtung zu Pfeilrichtung A verschiebt. Gleichzeitig wird ein anderer Teil des Flachbandkabels 10 von der Innenseite der äußeren Seitenwand 8 abgelöst, der dabei die U-förmige Umkehrung 15 bildet.

Die Figuren 1 und 3 zeigen eine Wickelfederkassette nach dem Stand der Technik, bei der die äußere Seitenwand 8 ebenfalls kreiszylindrisch ausgebildet ist. Der Bewegungsspalt 9 zwischen der inneren Seitenwand 7 und der äußeren Seitenwand 8 weist deshalb an jedem Punkt dieselbe Breite c auf. Abgesehen davon entsprechen die Bedeutungen der Bezugszeichen jenen, die im Zusammenhang mit den Figuren 2 und 4 verwendet wurden.

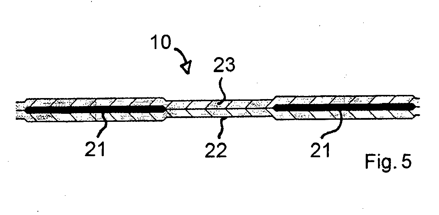

In Fig. 5 ist ein Ausschnitt aus einem Flachbandkabel 10 im Querschnitt dargestellt. Das Flachbandkabel weist mehrere Leiter 21, beispielsweise aus Kupfer, mit rechteckigem Querschnitt auf, die an ihren Schmalseiten voneinander beabstandet sind. Die Leiter sind auf eine isolierende Trägerschicht 22 aufgebracht und von einer isolierenden Deckschicht 23 bedeckt.

### Bezugszeichenliste

- 1: Wickelfederkassette
- 2: Rotor
- 3: Stator
- 4: zentrale Öffnung in der Deckwand
- 5: Bodenwand
- 6: zentrale Öffnung in der Bodenwand
- 7: innere, zylinderförmige Seitenwand
- 8: äußere zylinderförmige Seitenwand
- 9: Bewegungsspalt
- 10: Flachbandkabel
- 11: Steckanschluß am Stator
- 12: Steckanschluß am Rotor
- 13: erster Teilbereich des Flachbandkabels
- 14: zweiter Teilbereich des Flachbandkabels
- 15: dritter Teilbereich des Flachbandkabels = U-förmige Umkehrung
- 16: erster Abschnitt der Innenseite der Seitenwand 8
- 17: zweiter Abschnitt der Innenseite der Seitenwand 8
- 18: geradliniger Abschnitt

- 21: Leiter
- 22: Trägerschicht
- 23: Deckschicht

- a: Abstand zwischen dem zweiten halbkreisförmigen Abschnitt 17 und der kreiszylindrischen Seitenwand 7
- b: Abstand zwischen dem ersten halbkreisförmigen Abschnitt 16 und der kreiszylindrischen Seitenwand 7

## Patentansprüche

1. Wickelfederkassette mit einem beweglichen Bauteil 2 (Rotor) und einem feststehenden Bauteil 3 (Stator), wobei eines der Bauteile (2, 3) eine erste, innere zylindrische Seitenwand (7) und das andere Bauteil eine zweite, äußere zylindrische Seitenwand (8) aufweist, die einander unter Ausbildung eines Bewegungsspaltes (9) gegenüberliegen, und mit einem Flachbandkabel (10), das in dem Bewegungsspalt (9) unter Ausbildung einer U-förmigen Umbiegung (15) angeordnet ist und den Rotor (2) mit dem Stator (3) elektrisch verbindet,
**dadurch gekennzeichnet, daß**
eine der zylindrischen Seitenwände (7) kreiszylindrisch ist, während die andere zylindrische Seitenwand (8) eine Innenseite mit einem ersten, kreisbogenförmigen Abschnitt (16) und einem zweiten, konvexen Abschnitt (17), der dem ersten kreisbogenförmigen Abschnitt (16) gegenüberliegt, aufweist, wobei der erste kreisbogenförmige Abschnitt (16) und der zweite, konvexe Abschnitt (17) jeweils radial von der kreiszylindrischen Seitenwand (7) beabstandet sind, wobei
- der radiale Abstand (b) zwischen dem ersten, kreisbogenförmigen Abschnittes (16) und der kreiszylindrischen Seitenwand (7) geringer als der radiale Abstand (a) zwischen dem zweiten, konvexen Abschnitt (17) und der kreiszylindrischen Seitenwand (7) ist;
- die Innenseite der zylindrischen Seitenwand (8) mit dem ersten, kreisbogenförmigen Abschnitt (16) und dem zweiten, konvexen Abschnitt ohne einen Sattelpunkt ausgebildet ist; und
- die U-förmige Umbiegung (15) des Flachbandkabels (10) zwischen der kreiszylindrischen Seitenwand (7) und dem zweiten, konvexen Abschnitt (17) angeordnet ist.

2. Wickelfederkassette nach Anspruch 1, **dadurch gekennzeichnet, daß** der erste, kreisbogenförmige Abschnitt (16) halbkreisförmig ist (erster halbkreisförmiger Abschnitt) und der zweite, konvex Abschnitt (17) ebenfalls halbkreisförmig ist (zweiter halbkreisförmiger Abschnitt), wobei der erste halbkreisförmige Abschnitt (16) und der zweite halbkreisförmige Abschnitt (17) gleiche Krümmungsradien aufweisen.

3. Wickelfederkassette nach Anspruch 1 oder Anspruch 2, **dadurch gekennzeichnet, daß** die Innenseite der anderen zylindrischen Seitenwand (8) ferner geradlinige Abschnitte (18) aufweist.

4. Wickelfederkassette nach Anspruch 3, **dadurch gekennzeichnet, daß** die Innenseite der anderen zylindrischen Seitenwand (8) zwei geradlinige, einander gegenüberliegende Abschnitte (18) aufweist, die den ersten halbkreisförmigen Abschnitt (17) mit dem zweiten halbkreisförmigen Abschnitt (18) ohne Ausbildung eines Sattelpunktes verbinden.

5. Wickelfederkassette nach Anspruch 1, **dadurch gekennzeichnet, daß** die Innenseite der anderen zylindrischen Seitenwand (8) elliptisch oder oval geformt ist.

6. Wickelfederkassette nach einem der vorstehenden Ansprüche, **dadurch gekennzeichnet, daß** die Oberfläche des Flachbandkabels (10) ganz oder teilweise mit einem Haftmittel beschichtet ist.

7. Wickelfederkassette nach einem der vorstehenden Ansprüche, **dadurch gekennzeichnet, daß** der Rotor (2) die erste, innere zylindrische Seitenwand (7) aufweist.

8. Wickelfederkassette nach einem der vorstehenden Ansprüche, **dadurch gekennzeichnet, daß** die erste, innere zylindrische Seitenwand (7) die kreiszylindrische Seitenwand ist.

9. Wickelfederkassette nach einem der vorstehenden Ansprüche, **dadurch gekennzeichnet, daß** der Stator (3) die zweite, äußere zylindrische Seitenwand (8) aufweist.

10. Wickelfederkassette nach einem der vorstehenden Ansprüche, **dadurch gekennzeichnet, daß** die zweite, äußere zylindrische Seitenwand (8) die andere Seitenwand ist.

11. Wickelfederkassette nach einem der vorstehenden Ansprüche, **dadurch gekennzeichnet, daß** das Flachbandkabel (10) eine Dicke von mehr als 35 µm aufweist.

12. Verwendung einer Wickelfederkassette nach einem der Ansprüche 1 bis 11 in einem Kraftfahrzeug.

13. Verwendung nach Anspruch 12, **dadurch gekennzeichnet, daß** der Rotor (2) eine ringförmige Deckwand mit einer zentralen Öffnung (4) aufweist, wobei am inneren Umfang der Deckwand die erste, innere, zylinderförmige Seitenwand (7) der Wickelfederkassette (1) ausgebildet ist, die sich orthogonal von der ringförmigen Deckwand des Rotors (2) zu der Bodenwand (5) des Stators (3) erstreckt, und wobei die Außenseite der ersten zylinderförmigen Seitenwand (7) eine Aufnahme für die Lenksäule bildet, an der der Rotor (2), der rotierbar mit dem Stator verbunden ist, drehfest gehalten ist.

## Claims

1. A coil spring cassette having a movable member 2 (rotor) and a fixed member 3 (stator), wherein one of the members (2, 3) has a first inner cylindrical side wall (7) and the other member has a second outer cylindrical side wall (8) that are opposite to each other to form a movement gap (9), and having a flat cable (10) that is arranged in the movement gap (9) to form a U-shaped bend (15) and electrically connects the rotor (2) to the stator (3),
**characterized in that**
one of the cylindrical sidewalls (7) is circular cylindrical, whereas the other cylindrical side wall (8) has an inner side with a first circular portion (16) and a second convex portion (17) opposite to the first circular portion (16), wherein the first circular portion (16) and the second convex portion (17) each are radially spaced from the circular cylindrical side wall (7), wherein
- the radial distance (b) between the first circular portion (16) and the circular cylindrical side wall (7) is less than the radial distance (a) between the second convex portion (17) and the circular cylindrical side wall (7);
- the inner side of the cylindrical side wall (8) with the first circular portion (16) and the second convex portion is formed without a saddle point; and
- the U-shaped bend (15) of the flat cable (10) is arranged between the circular cylindrical side wall (7) and the second convex portion (17).

2. The coil spring cassette according to claim 1, **characterized in that** the first circular portion (16) is semicircular (first semicircular portion) and the second convex portion (17) also is semicircular (second semicircular portion), wherein the first semicircular portion (16) and the second semicircular portion (17) have the same radii of curvature.

3. The coil spring cassette according to claim 1 or claim 2, **characterized in that** the inner side of the other cylindrical sidewall (8) further has linear portions (18).

4. The coil spring cassette according to claim 3, **characterized in that** the inner side of the other cylindrical sidewall (8) has two linear portions (18), which are opposite to each other, connecting the first semicircular portion (17) to the second semicircular portion (18) without forming a saddle point.

5. The coil spring cassette according to claim 1, **characterized in that** the inner side of the other cylindrical sidewall (8) has an elliptical or oval shape.

6. The coil spring cassette according to any one of the preceding claims, **characterized in that** the surface of the flat cable (10) is completely or partially coated with an adhesive.

7. The coil spring cassette according to any one of the preceding claims, **characterized in that** the rotor (2) has the first inner cylindrical sidewall (7).

8. The coil spring cassette according to any one of the preceding claims, **characterized in that** the first inner cylindrical sidewall (7) is the circular cylindrical sidewall.

9. The coil spring cassette according to any one of the preceding claims, **characterized in that** the stator (3) has the second outer cylindrical sidewall (8).

10. The coil spring cassette according to any one of the preceding claims, **characterized in that** the second outer cylindrical sidewall (8) is the other sidewall.

11. The coil spring cassette according to any one of the preceding claims, **characterized in that** the flat cable (10) has a thickness of more than 35 µm.

12. Use of a coil spring cassette according to any one of claims 1 to 11 in a motor vehicle.

13. The use according to claim 12, **characterized in that** the rotor (2) has an annular top wall with a central opening (4), wherein on the inner periphery of the top wall the first inner cylindrical sidewall (7) of the coil spring cassette (1) is formed that orthogonally extends from the annular top wall of the rotor (2) to the bottom wall (5) of the stator (3), and wherein the outer side of the first cylindrical sidewall (7) forms a receptacle for the steering column to which the rotor (2), that is rotatably connected to the stator, is splined.

## Revendications

1. Cassette à ressort hélicoïdal avec un élément mobile 2 (rotor) et un élément fixe 3 (stator), l'un des éléments (2, 3) présentant une première paroi latérale cylindrique (7) intérieure et l'autre élément une deuxième paroi latérale cylindrique (8) extérieure qui sont disposées de façon opposée l'une par rapport à l'autre en formant une fente de mouvement (9) et avec un câble à bande plate (10) qui est disposé dans la fente de mouvement (9) en formant un cintrage en forme de U (15) et qui associe électriquement le rotor (2) au stator (3),
**caractérisée en ce que**
l'une des parois cylindriques (7) est cylindrique circulaire alors que l'autre paroi latérale cylindrique (8) présente une face intérieure avec une première section en forme d'arc de cercle (16) et une deuxième section convexe (17) qui est opposée à la première section en forme d'arc de cercle (16), la première section en forme d'arc de cercle (16) et la deuxième section convexe (17) étant à distance respectivement radialement de la paroi latérale cylindrique (7),
- la distance radiale (b) entre la première section en forme d'arc de cercle (16) et la paroi latérale cylindrique (7) étant inférieure à la distance radiale (a) entre la deuxième section convexe (17) et la paroi latérale cylindrique (7) ;
- la face intérieure de la paroi latérale cylindrique (8) étant formée par la première section en forme d'arc de cercle (16) et la deuxième section convexe sans de point hyperbolique ; et
- le cintrage en forme de U (15) du câble à bande plate (10) étant disposé entre la paroi latérale cylindrique (7) et la deuxième section convexe (17).

2. Cassette à ressort hélicoïdal selon la revendication 1 caractérisée en que la première section en forme d'arc de cercle (16) est en forme de demi-cercle (première section en forme de demi-cercle) et que la deuxième section convexe (17) est également en forme de demi-cercle (deuxième section en forme de demi-cercle), la première section en forme de demi-cercle (16) et la deuxième section en forme de demi-cercle (17) présentant les mêmes rayons de courbure.

3. Cassette à ressort hélicoïdal selon la revendication 1 ou 2 caractérisée en que la face intérieure de l'autre paroi latérale cylindrique (8) présente en plus deux sections (18) droites.

4. Cassette à ressort hélicoïdal selon la revendication 3 caractérisée en que la face intérieure de l'autre paroi latérale cylindrique (8) présente deux sections (18) droites opposées l'une par rapport à l'autre qui associent la première section en forme de demi-cercle (17) à la deuxième section en forme de demi-cercle (18) sans formation d'un point hyperbolique.

5. Cassette à ressort hélicoïdal selon la revendication 1 caractérisée en que la face intérieure de l'autre paroi latérale cylindrique (8) a une forme elliptique ou ovale.

6. Cassette à ressort hélicoïdal selon l'une des revendications précédentes caractérisée en que la surface du câble à bande plate (10) est revêtue totalement ou partiellement par un agent adhésif.

7. Cassette à ressort hélicoïdal selon l'une des revendications précédentes caractérisée en que le rotor (2) présente la première paroi latérale cylindrique (7) intérieure.

8. Cassette à ressort hélicoïdal selon l'une des revendications précédentes caractérisée en que la première paroi latérale cylindrique (7) intérieure est la paroi latérale cylindrique circulaire.

9. Cassette à ressort hélicoïdal selon l'une des revendications précédentes caractérisée en que le stator (3) présente la deuxième paroi latérale cylindrique (8) extérieure.

10. Cassette à ressort hélicoïdal selon l'une des revendications précédentes caractérisée en que la deuxième paroi latérale cylindrique (8) extérieure est l'autre paroi latérale.

11. Cassette à ressort hélicoïdal selon l'une des revendications précédentes caractérisée en que le câble à bande plate (10) présente une épaisseur de plus de 35 µm.

12. Utilisation d'une cassette à ressort hélicoïdal selon l'une des revendications 1 à 11 dans un véhicule.

13. Utilisation selon la revendication 12 **caractérisée en ce que** le rotor (2) présente une paroi de couverture annulaire avec une ouverture centrale (4), sur la circonférence de la paroi de couverture étant formée la première paroi latérale cylindrique (7) intérieure de la cassette à ressort hélicoïdal (1) qui s'étend orthogonalement de la paroi de couverture annulaire du rotor (2) vers la paroi de fond (5) du stator (3) et la face extérieure de la première paroi latérale cylindrique (7) formant un logement pour la colonne de direction à laquelle le rotor (2), associé de façon rotative au stator, est maintenu de façon fixe.
